# EUROPEAN PATENT SPECIFICATION

(11) **EP 2 669 832 B1**
(45) Date of publication and mention of the grant of the patent: **27.04.2016**
(21) Application number: 13169014.1
(22) Date of filing: 23.05.2013
(51) Int. Cl.: G06F 21/10, G06F 21/62

(54) **Protection of series data**
Schutz von Seriendaten
Protection de données en série

(30) Priority: 31.05.2012 JP 2012124731
(43) Date of publication of application: 04.12.2013
(73) Proprietor: eStijl Co., Ltd., Tokyo Tokyo 103-0027 (JP)
(72) Inventor: Minaguchi, Hiroshi, Tokyo, 103-0027 (JP); Itoh, Hiroki, Tokyo, 103-0027 (JP)
(74) Representative: Stebbing, Timothy Charles

(56) References cited:
- US-A1- 2008 262 985
- US-A1- 2010 058 476

## Description

### TECHNICAL FIELD

The invention relates to protection of information in distributing series data.

### RELATED ART

US 2010/058476 A1 discloses a system for data retention, which comprises storing files along with dummy files on a data retention server. Other technologies for protecting information are known (refer to Patent Documents D1 to D5).
Patent Document 1: JP-A-1992-358436
Patent Document 2: JP-A-2008-245145
Patent Document 3: JP-A-2006-246166
Patent Document 4: JP-A-2006-185096
Patent Document 5: JP-A-2007-78739

### SUMMARY

None of Patent Documents 1 to 5 or US 2010/058476 A1 relates to protection of information communicated between plural applications in a single information-processing device.

The invention defined in the claims provides protection of information communicated between plural applications.

### EFFECT OF THE INVENTION

The present invention provides protection of data communicated between plural applications.

### BRIEF DESCRIPTION OF THE DRAWINGS

Exemplary embodiments will be described with reference to the following drawings, wherein:
FIG. 1 shows an example of a functional configuration of information distributing system 5 in accordance with a related art;
FIG. 2 schematically shows an example of data distributed by server device 10;
FIG. 3 shows an example of a functional configuration of information distribution system 1 according to one exemplary embodiment;
FIG. 4 shows an example of a hardware configuration of client device 20;
FIG. 5 shows an example of a software configuration of client device 20;
FIG. 6 shows an example of a flowchart illustrating an operation of client device 20;
FIG. 7 shows an example of data to which authentication information is added;
FIG. 8 shows an example of data provided by relaying application 252;
FIG. 9 shows an example of authentication information according to modification 6; and
FIG. 10 shows another example of authentication information according to modification 6.

### DETAILED DESCRIPTION

### 1. Outline

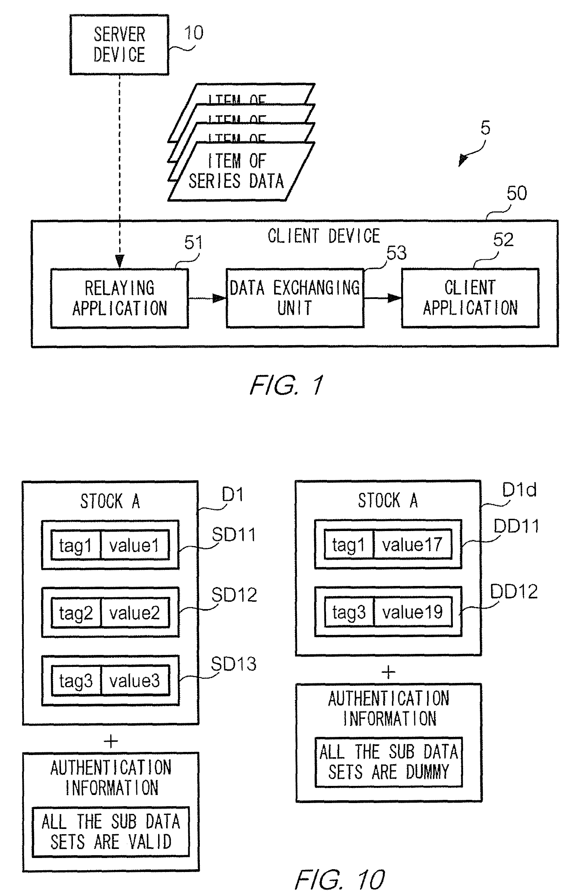

FIG. 1 shows an example of a functional configuration of information distributing system 5 according to a related art. Information-processing system 5 includes server device 10 and client device 50. Server device 10 distributes series data. Here, "series data" is a series of data sets sequentially distributed, and has semantics (or increases semantics) by being displayed or analyzed sequentially. The series data includes, for example, market information in a financial market. Here, stock price in a stock market is used as an example of the market information. The stock price varies from hour to hour, depending on a condition of the market. A user who deals in stocks predicts a future price based on temporal alteration of the stock price so as to determine whether to sell or buy a stock. For example, if there exists information showing only that a price of a stock at a point in time is 1,000 Japanese yen, the information is of no use in determining whether to sell or buy the stock. The semantics of the information differ between a case where a price decreases to 1,000 Japanese yen and another case where a price increases to 1,000 Japanese yen.

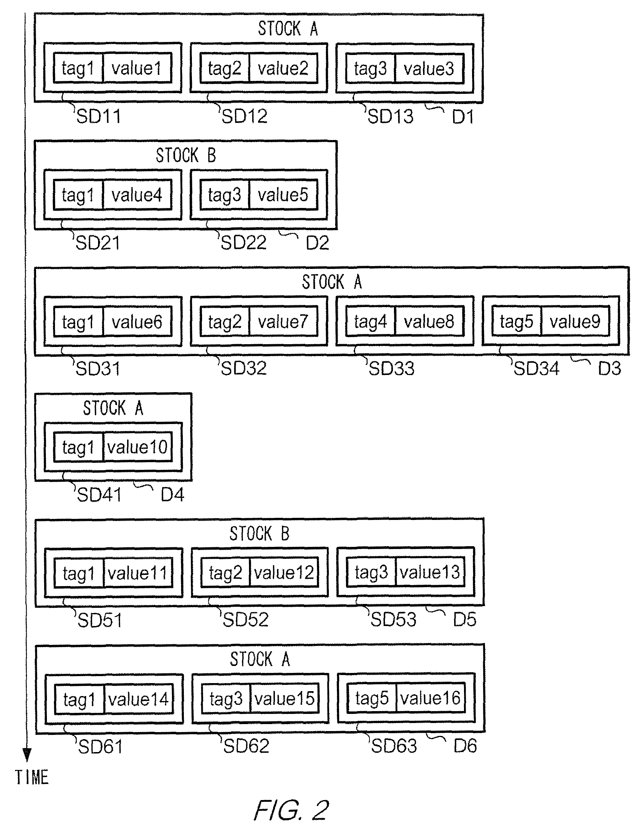

FIG. 2 schematically shows an example of data distributed by server device 10. Server device 10 sequentially distributes data sets D1 to Dn (in FIG. 2, data sets D1 to D6 are shown). Each of data sets D1 to Dn includes at least one sub data set. A number of sub data sets included in a data set is not constant and differs for each data set. For example, data set D1 includes three sub data sets SD11, SD12, and SD13; while in another example, data set D2 includes two sub data sets SD21 and SD22.

Sub data sets included in one data set have an attribute in common. For example, sub data sets included in a data set show market information relating to a price of a specific stock. In an example shown in FIG. 2, data sets D1, D3, D4, and D6 are groups of sub data sets relating to a price of stock A, and data sets D2 and D5 are groups of sub data sets relating to a price of stock B.

Each sub data set includes two parameters, for example, a tag and a value. The tag and value each have a value, respectively. The tag shows a category of market information (present price, opening price, highest price, lowest price, and trading volume, for example). If the tag shows "present price" and the value shows "1,000 Japanese yen", this sub data set shows that the present price of the stock is 1,000 Japanese yen. In FIG. 2, values of the tag are denoted as tag1, tag2, tag3, ..., and values of the value are denoted as value1, value2, value3, ....

In this example, plural sub data sets corresponding to a specific stock and a specific tag form a set of series data. In an example shown in FIG. 2, sub data sets SD11, SD31, SD41, and SD61, which relate to tag1, form a set of series data. In other words, an item of series data consists of a sub data set.

Referring to FIG. 1 again, client device 50 receives data distributed from server device 10, and processes the received data. In this example, client device 50 is an information-processing device, more specifically, a personal computer. Client device 50 includes relaying application 51, client application 52, and data exchanging unit 53. Data exchanging unit 53 is a software module for communicating between two applications (in other words, for transmitting and receiving data or an instruction between two applications). Data exchanging unit 53 is, for example, a DDE (Dynamic Data Exchange) provided in Microsoft Windows (TM). Relaying application 51 sequentially provides to client application 52 at least one sub data set included in the data set received from server device 10, via data exchanging unit 53.

Client application 52 is a client software program for processing data distributed from server device 10. In this example, client application 52 is a spreadsheet software program (for example, Microsoft Excel (TM)) with an add-on program being provided. Client application 52 obtains a sub data set from data exchanging unit 53, and performs a calculation with the spreadsheet using the received data.

If data exchanging unit 53 can obtain data from any application, like the DDE, a problem may arise as follows. Some services provide market information with fees being paid, and prohibit redistribution of the market information. However, in regard to data exchanging unit 53 like the DDE, a malicious third party (acting against the data distributor) can prepare an application that obtains from data exchanging unit 53 data distributed by server device 10 and automatically redistribute the obtained data to other users. One exemplary embodiment provides protection of data in such a system.

### 2. Configuration

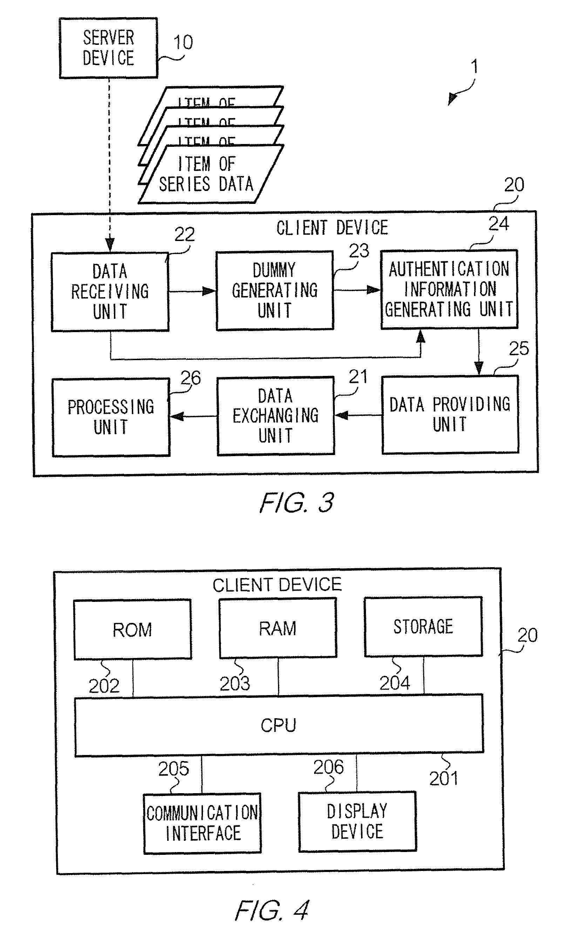

FIG. 3 shows an example of a functional configuration of information distributing system 1 according to one exemplary embodiment of the invention. Information distributing system 1 provides server device 10 and client device 20. Server 10 has been explained already with reference to FIG. 1.

Client device 20 receives data distributed from server device 10 and processes the received data. Client device 20 includes data exchanging unit 21, data receiving unit 22, dummy generating unit 23, authentication information generating unit 24, data providing unit 25, and processing unit 26. Data exchanging unit 21 exchanges data between plural applications. Data receiving unit 22 receives a data set including a sub data set forming a part of series data. Dummy generating unit 23 generates a dummy data set for a target sub data set. The target sub data set is a sub data set to be processed, which is sequentially selected from the at least one sub data set included in the data set received by data receiving unit 22. The generated dummy data set is different from the sub data set based on which the dummy data set is generated. Authentication information generating unit 24 generates authentication information based on a target data set. The target data set is a data set to be processed, which is sequentially selected from the at least one sub data set included in the data set received by data receiving unit 22 and the dummy data set generated by dummy generating unit 23. Data providing unit 25 provides via data exchanging unit 21 the target data set thus processed, to which the authentication information is added.

In this example, dummy generating unit 23 generates a dummy data set(s) at a certain probability ratio if the data receiving unit 22 receives a sub data set which is included in the series data. The probability ratio is determined depending on a source of the series data. It is to be noted that information distributing system 1 may include plural server device 10, although only one server device 10 is shown in FIG. 3, for simplification.

FIG. 4 shows an example of a hardware configuration of client device 20. Client device 20 is a computer device including CPU (Central Processing Unit) 201, ROM (Read Only Memory) 202, RAM (Random Access Memory) 203, storage 204, communication interface 205, and display device 206. CPU 201 is a control device (processor) for controlling the components of client device 20. ROM 202 is a non-volatile memory storing programs and data. RAM 203 is a volatile memory that functions as a work area for CPU 201 executing a program. Storage 204 includes a rewritable storage device storing programs and data. Communication interface 205 is an interface for communicating via a network; more specifically, an interface for communicating with server 10. Display device 206 displays information, for example, results of execution of a program, under the control of CPU 201.

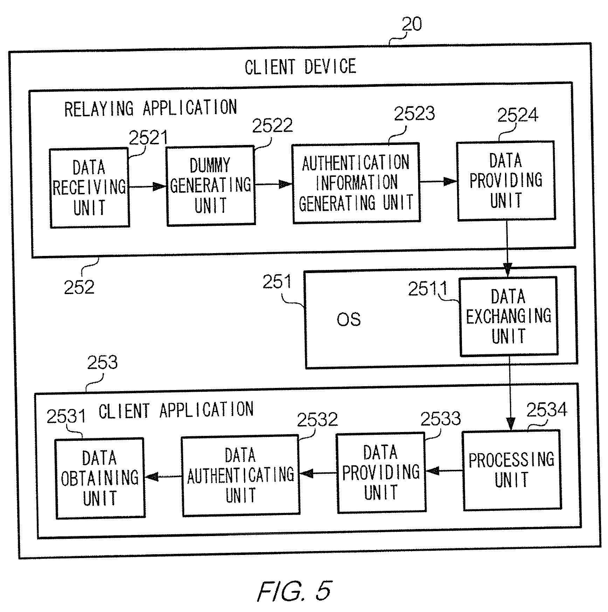

FIG. 5 shows an example of a software configuration of client device 20. Client device 20 includes OS (Operating System) 251, relaying application 252, and client application 253. OS 251 is system software for proving basic functions in a computer device as client device 20. In this example, OS 251 includes data exchanging unit 2511. Data exchanging unit 2511 is a software module for exchanging data between two applications. Data exchanging unit 2511 holds data provided by an application. If data exchanging unit 2511 receives a request from another application, data exchanging unit 2511 provides the held data to the application that is the source of the request.

Relaying application 252 receives series data from server device 10, and provides the received data to client application 253 via data exchanging unit 2511. Relaying application 252 includes data receiving unit 2521, dummy generating unit 2522, authentication information generating unit 2523, and data providing unit 2524. Data receiving unit 2521 sequentially receives a data set from server device 10. Dummy generating unit 2522 generates, at a predetermined timing, a dummy data set in a format identical with that of the sub data set included in the series data. Authentication information generating unit 2523 generates for a data set to be processed (hereinafter, the data set is referred to as a "target data set") authentication information using a predetermined algorithm. The target data set is sequentially selected from among sub data sets included in the data set received by data receiving unit 2521, and dummy data sets generated by dummy generating unit 2522. The authentication information shows whether the target data set is a dummy data set. Data providing unit 252 provides the target data to which the authentication information generated by authentication information generating unit 2523 is added, to data exchanging unit 2511.

Client application 253 obtains the series data from data exchanging unit 2511, and processes the obtained data. Client application 253 includes data obtaining unit 2531, data authenticating unit 2532, data providing unit 2533, and processing unit 2534. Data obtaining unit 2531 obtains a sub data set included in the series data. Data authenticating unit 2532 authenticates the data obtained by data obtaining unit 2531, with a predetermined algorithm. This algorithm corresponds to the algorithm for generating the authentication information by authentication information generating unit 2523. Data providing unit 2533 provides to processing unit 2534 a data set that is authenticated as a valid data set (not a dummy data set). Processing unit 2534 executes a predetermined process with the data provided by data providing unit 2533 (for example, calculation using a spreadsheet and displaying of the results).

Data receiving unit 2521 is an example of data receiving unit 22. Dummy generating unit 2522 is an example of dummy generating unit 23. Authentication information generating unit 2523 is an example of authentication information generating unit 24. Data providing unit 2524 is an example of data providing unit 25. Client application 253 is an example of processing unit 26.

### 3. Operation

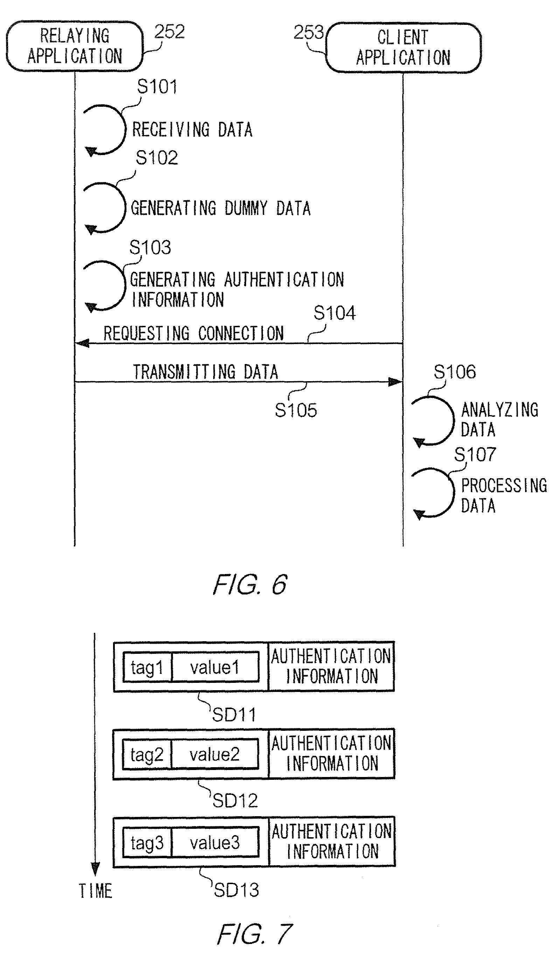

FIG. 6 shows an example of a flowchart illustrating an operation of client device 20. Although software such as OS 251 is described as a subject of a process in the following description, this description means CPU 201 executing software executes the process by cooperating with other hardware components. In the following example, data exchanging unit 2511 is the DDE, relaying application 252 is a server (a source) of the DDE, and client application 253 is a client (a destination) of the DDE.

In step S101, relaying application 252 receives a data set D (here, data sets D1 to Dn are generalized as "data set D." Similarly, the sub data sets are generalized as "sub data set SD.") Relaying application 252 stores at least one sub data set SD included in the received data set D, sequentially in a FIFO (First In First Out) queue.

In step S102, relaying application 252 generates for each sub data set SD a dummy data set DD if a predetermined condition is satisfied. The condition is, for example, a condition that defines probability ratio r, which is a probability ratio for generating a dummy data set DD, and which has a predetermined value. The probability ratio r corresponds to a ratio of the generated dummy data set DD with the number of sub data sets SD forming series data. For example, in a case that the series data consists of 1,000 sub data sets SD, if 100 dummy data sets DD are generated, probability r is, r = 100/1000 = 0.1. Dummy data set DD is described in a format identical with that of the corresponding sub data set SD. If a dummy data set DD is generated, relaying application 252 stores the generated dummy data set DD in the queue.

In this example, dummy data set DD is generated under a restricted condition. Here, the description is given with an example where the series data shows prices of stocks. In such a case, the series data includes, for example, highest price, present price, and lowest price. If a dummy data set showing the present price is generated at random, the present price may be lower than the lowest price. If the present price is lower than the lowest price, a third party can easily understand that the data is dummy data. Therefore, relaying application 252 generates a dummy data set under a restricted condition, for example, the generated dummy present price should be within a range between the lowest price and the highest price. Relaying application 252 includes a database describing the restricted conditions, and generates a dummy data set with reference to the database.

In step S103, relaying application 252 generates authentication information by using a data set read out from the queue, that is, a sub data set SD or a dummy data set DD and referred to as a "target data set" hereinafter. The authentication information shows whether the target data set is a valid sub data set SD or a dummy data set DD. The algorithm used here is, for example, an algorithm using a hash function. More specifically, relaying application 252 calculates a hash value using a predetermined hash function and a flag showing whether the target data set is dummy data or not. Relaying application 252 uses the calculated hash value as the authentication information.

FIG. 7 shows an example of data to which the authentication information is added. In this example, authentication information is added to each of sub data sets SD11, SD12, and SD13, included in data set D1, respectively. Sub data sets SD11, SD12, and SD13 themselves are unencrypted (plain data).

Referring to FIG. 6 again, in step S104, client application 253 transmits to relaying application 252 a request for access to the DDE. When receiving the request from client application 253, which is a DDE client, relaying application 252, which is a DDE server, establishes communication (interprocess communication or connection session) with the source of the request.

In step S105, relaying application 252 transmits data to client application 253 via the DDE communication. The data transmitted here is data (shown in FIG. 7, for example) to which the authentication information generated in step S013 is added. Practically, after the DDE communication is established with client application 253, the processes in steps S101 to S103 are executed repeatedly. Every time the data is updated (in other words, every time the authentication information is generated in authentication information), relaying application 252 transmits the data to client application 253, a DDE client. In another example, relaying application 252 may transmit the data if a request is transmitted from client application 253.

In step S106, client application 253 analyzes the received data. Client application 253 generates authentication information by an algorithm identical with that used in step S103, for example. In other words, client application 253 calculates a hash value using a predetermined hash function and a flag showing that the received data set is not dummy data. Client application 253 compares one hash value added to the received data set as the authentication information and another hash value calculated by client application 253 itself. If these two hash values are identical, client application 253 determines that the data set is a valid data set (not a dummy data set). If these two hash values are not identical, client application 253 determines that the data set is a dummy data set.

In step S107, client application 253 executes a predetermined process using a data set that is determined to be a valid data set.

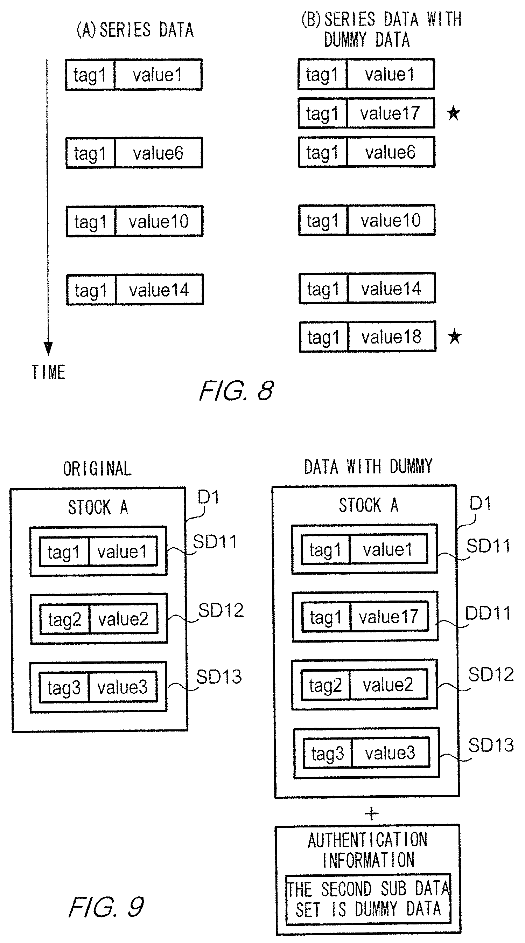

FIG. 8 shows an example of data provided by relaying application 252. FIG. 8, (A) shows an example of series data and (B) shows an example of series data along with dummy data. In other words, FIG. 8, (A) shows an example of data provided by a prior art, and (B) shows an example of data provided according to information distributing system 1 of the present exemplary embodiment. Data sets marked with a star are dummy data sets.

According to information distributing system 1, dummy data sets (data sets that are not included in the series data) are inserted into the series data. Thus, if an application program prepared by a malicious third party accesses relaying application 252 via the DDE, and transfers the obtained data to other users, the transferred data has no value as the series data. On the contrary, client application 253, a valid client application, can identify and remove the dummy data sets. Therefore, client application 253 can process only the valid data sets. Thus, according to information distributing system 1, data distributed by server device 10 can be protected.

### 4. Modification

The invention is not restricted to the exemplary embodiment described above. Various modifications may be applied to the exemplary embodiment. In the following, some modifications will be described. Two or more modifications may be combined.

### 4-1. Modification 1

In the exemplary embodiment, probability ratio r for generating dummy data set DD is a constant. However, probability ratio r may be changed in accordance with various attributes. Generally, a greater probability ratio r (in other words, a case where dummy data sets are more frequently inserted) provides stronger protection of data. For example, if data is distributed by plural server devices, probability ratio r may be changed depending on from which server device the data is distributed. More specifically, if there are server device A, which charges higher fees, and server device B, which charges lower fees, probability ratio rA for generating dummy data set DD if the data is transmitted from server device A and probability ratio rB for generating dummy data set DD if the data is transmitted from server device B may satisfy a condition of rA>rB. In another example, probability ratio r may be changed depending on an attribute(s) of a user of client device 20. According to modification 1, strength of data protection can be changed in response to various attributes.

### 4-2. Modification 2

An algorithm for generating the authentication information is not restricted to an example described in the exemplary embodiment. For example, relaying application 252 may use a flag showing whether the corresponding data set is a dummy data set encrypted with an encryption key, as the authentication information. In such a case, client application 253 uses a corresponding decryption key so as to decrypt the authentication information. Further, data communicated between relaying application 252 and client application 253 may be encrypted with an encryption key.

### 4-3. Modification 3

Information used for generating the authentication information is not restricted to an example described in the exemplary embodiment. For example, relaying application 252 may generate authentication information by using information depending on client device 20; for example, a system clock provided by OS 251. In such a case, client device 251 includes a providing unit that provides a clock. Relaying application adds clock data showing a clock, as the authentication information. If a difference between a clock shown by the clock data included in the authentication information and another clock obtained by client application 253 itself (system clock is provided from OS 251 to client application 253) is less than or equal to a predetermined threshold, information included in the authentication information and showing whether the corresponding target data set is dummy data or not, is determined to be valid.

### 4-4. Modification 4

Examples of data exchanging unit 21 and processing unit 26 are not restricted to the exemplary embodiment. A software component other than that described in the exemplary embodiment may include functions of data exchanging unit 21 and processing unit 26.

### 4-5. Modification 5

An event that triggers generation of a dummy data set is not restricted to an event of receiving data from server device 10. For example, relaying application 252 may periodically determine whether a dummy data set is to be generated. In such a case, a dummy data set is generated by using data stored in the queue. Further, although only one dummy data set DD is generated from one sub data set SD, plural dummy data sets DD may be generated from one sub data set SD.

Alternatively, generation of a dummy data set may be triggered by an event of establishing a connection between relaying application 252 and client application 253. Although, in FIG. 6, data is transmitted via a connection session after the dummy data set is generated, operation of client device 20 is not restricted to this example. By a method in which plural dummy data sets are transmitted via a single connection session after these dummy data sets are generated, there is a possibility that the dummy data set may be identified by collecting and analyzing data in plural connection sessions. The improved method is to generate dummy data sets for every connection session so as to decrease a possibility of identifying the dummy data sets.

### 4-6. Modification 6

Relationship between data and authentication information is not restricted to an example described in the exemplary embodiment. In the exemplary embodiment, sub data set SD and an item of authentication information correspond on a one-to-one basis. For example, unique authentication information may be given for every data set D.

FIG. 9 shows an example of authentication information according to modification 6. In FIG. 9, the left side shows an example of original data set D1 (a data set before the generation of the dummy data set), and the right side shows data set D1 after the generation of the dummy data set. In this example, dummy data set DD11 is generated for sub data set SD11. In this example, authentication information generating unit 24 generates a single item of authentication information for whole data set D1 after the generation of the dummy data set. The authentication information includes information showing which sub data set is dummy data (in this example, the authentication information shows that the second sub data set is dummy data).

FIG. 10 shows another example of authentication information according to modification 6. In FIG. 10, the left side shows an example of original data set D1, and the right side shows data set D1d, which includes only dummy data sets. In this example, a single item of authentication information is given for each of whole data set D1 and D1d, respectively. The authentication information for data set D1 shows that all the sub data sets included in data set D1 are valid. The authentication information for data set D1d shows that all the sub data sets included in data set Did are dummy data.

### 4-7. Modification 7

A method for distributing data from server device 10 is not restricted to an example described in the exemplary embodiment. In the exemplary embodiment, data is distributed using a so-called update system where data sets are distributed if market information is changed. However, server device 10 may distribute data using a so-called request/reply method where a deal data set including plural data sets is distributed if server device 10 receives a request for transmitting data from client device 20. In such a case, relaying application 252 determines whether a dummy data set is to be generated for every data set, and generates a dummy data set depending on the result of the determination. In other words, relaying application 252 may insert plural dummy data sets into a single deal data set.

### 4-8. Further embodiment

Data distributed from server device 10 is not restricted to market information. A program executed by CPU 201 may be provided with a computer-readable storage medium such as a magnetic storage medium (magnetic tape, magnetic disk (HDD or FD (Flexible Disk)), and so on), an optical storage medium (optical disk (CD (Compact Disk), DVD (Digital Versatile Disk), and so on), a magnetic-optical storage medium, a semiconductor memory (flash ROM). Further, the program may be downloaded via a network such as the Internet.

## Claims

1. An information distributing system (1) comprising a server device (10) and a client device (20);
the server device (10) configured to distribute series data (D1 to Dn), the series data consisting of plural data sets (D1, D2, D3....Dn), each of the plurality of data sets including at least one sub data set (SD), each sub data set (SD) including the same parameters so as to have semantics by being analyzed sequentially;
the client device (20) comprising a relaying application (252), a data exchanging unit (2511), and a client application (253);
the relaying application (252) configured to receive the series data (D1 to Dn) from the server device (10) and to relay the plural data sets (D1, D2, D3....Dn);
the data exchanging unit (2511) configured to exchange data between a plurality of applications; and
the client application (253) configured to process the series data (D1 to Dn), wherein
the relaying application (252) includes:
a receiving unit (2521) that is configured to receive the series data (D1 to Dn);
a first generating unit (2522) that, for each sub data set sequentially selected from said at least one sub data set and according to a certain predetermined probability ratio, is configured to generate a dummy data set (DD), the dummy data set (DD) being different from the selected sub data set (SD);
a second generating unit (2523) that is configured to generate authentication information for each of said at least one sub data set (SD) and the generated dummy data set (DD); and
a first providing unit (2524) that is configured to provide data via the data exchanging unit (2511) to the client application (253), the data including the said at least one sub data set (SD) as valid data, the generated dummy data set (DD) and the authentication information generated by the second generating unit (2523); and
the client application (253) includes:
an obtaining unit (2531) that is configured to obtain a data set including the said at least one sub data set (SD) as valid data and the generated dummy data set (DD) and the authentication information via the data exchanging unit (2511);
a verifying unit (2532) that is configured to verify the authentication information included in the data obtained by the obtaining unit (2531) to determine whether the data set from the data exchanging unit (2511) is a valid data set, or includes a dummy data set (DD); and
a processing unit (2534) that is configured to execute a predetermined process using the data set determined to be valid by the verifying unit (2532).

2. The information distributing system (1) according to Claim 1, wherein the probability ratio is determined depending on a source of the series data (D1 to Dn).

3. The information distributing system (1) according to Claim 1, further comprising a second providing unit that provides a clock, wherein
the second generating unit (2523) is adapted to generate the authentication information based on the said at least one sub data set (SD) or the generated dummy data set (DD) and the clock provided by the second providing unit.

4. The information distributing system (1) according to Claim 1, wherein
the first providing unit (2524) is adapted to provide the data via the data exchanging unit (2511), with the data to which the authentication information is generated by the second generating unit (2523) being unencrypted.

5. The information distributing system (1) according to Claim 1, wherein
the second generating unit (2523) is adapted to generate one item of the authentication information for a plurality of sub data sets (SD).

6. The information distributing system (1) according to Claim 5, wherein
the one item of the authentication information includes information for identifying valid sub data sets from a corresponding plurality of sub data sets (SD).

7. A computer-readable storage medium storing a program causing a computer device to execute a process, the process comprising:
in a relaying application (252), receiving the series data (D1 to Dn) from a server device (10) and relaying the plural data sets (D1, D2, D3....Dn), the series data consisting of plural data sets (D1, D2, D3....Dn), each of the plurality of data sets including at least one sub data set (SD), each sub data set (SD) including the same parameters so as to have semantics by being analyzed sequentially;
in a data exchanging unit (2511), exchanging data between a plurality of applications; and
in a client application (253), processing the series data (D1 to Dn), wherein receiving in the relaying application (252) includes:
receiving (2521) the series data (D1 to Dn);
first generating (2522), for each sub data set sequentially selected from said at least one sub data set and according to a certain predetermined probability ratio, a dummy data set (DD), the dummy data set (DD) being different from the selected sub data set (SD);
second generating (2523) authentication information for each of said at least one sub data set (SD) and the generated dummy data set (DD); and
providing (2524) data via the data exchanging unit (2511) to the client application (253), the data including the said at least one sub data set (SD) as valid data and the generated dummy data set (DD) and the authentication information generated by the second generating unit (2523);
and wherein processing in the client application (253) includes:
obtaining (2531) a data set including the said at least one sub data set (SD) as valid data and the generated dummy data set (DD) if any and the authentication information via the data exchanging unit (2511);
verifying (2532) the authentication information included in the obtained data to determine whether the data set from the data exchanging unit (2511) is a valid data set, or includes a dummy data set (DD); and
executing (2534) a predetermined process using the data set determined to be valid.

8. An information-processing method in an information distributing system (1) comprising a server device (10) and a client device (20); the server device (10) distributing series data (D1 to Dn), the series data consisting of plural data sets (D1, D2, D3....Dn), each of the plurality of data sets including at least one sub data set (SD), each sub data set (SD) including the same parameters so as to have semantics by being analyzed sequentially;
the method comprising:
in a relaying application (252), receiving the series data (D1 to Dn) from a server device (10) and relaying the plural data sets (D1, D2, D3....Dn), the series data consisting of plural data sets (D1, D2, D3....Dn), each of the plurality of data sets including at least one sub data set (SD), each sub data set (SD) including the same parameters so as to have semantics by being analyzed sequentially; in a data exchanging unit (2511), exchanging data between a plurality of applications; and
in a client application (253), processing the series data (D1 to Dn), wherein
receiving in the relaying application (252) includes:
receiving (2521) the series data (D1 to Dn);
first generating (2522), for each sub data set sequentially selected from said at least one sub data set and according to a certain predetermined probability ratio, a dummy data set (DD), the dummy data set (DD) being different from the selected sub data set (SD);
second generating (2523) authentication information for each of said at least one sub data set (SD) and the generated dummy data set (DD); and
providing (2524) data via the data exchanging unit (2511) to the client application (253), the data including the said at least one sub data set (SD) as valid data and the generated dummy data set (DD) and the authentication information generated by the second generating unit (2523);
and wherein processing in the client application (253) includes:
obtaining (2531) a data set including the said at least one sub data set (SD) as valid data and the generated dummy data set (DD) if any and the authentication information via the data exchanging unit (2511);
verifying (2532) the authentication information included in the obtained data to determine whether the data set from the data exchanging unit (2511) is a valid data set or includes a dummy data set (DD); and
executing (2534) a predetermined process using the data set determined to be valid.

## Patentansprüche

1. Informationsverteilungssystem (1), eine Server-Vorrichtung (10) und eine Client-Vorrichtung (20) umfassend, wobei:
die Server-Vorrichtung (10) dafür konfiguriert ist, Datenreihen (D1 bis Dn) zu verteilen, wobei die Datenreihen aus mehreren Datensätzen (D1, D2, D3 ... Dn) bestehen, wobei jeder der mehreren Datensätze mindestens einen Unterdatensatz (SD) beinhaltet, wobei jeder Unterdatensatz (SD) die gleichen Parameter beinhaltet, so dass sie Semantik aufweisen, indem sie fortlaufend analysiert werden,
die Client-Vorrichtung (20) eine Weiterschaltungsanwendung (252), eine Datenaustauscheinheit (2511) und eine Client-Anwendung (253) umfasst,
die Weiterschaltungsanwendung (252) dafür konfiguriert ist, die Datenreihen (D1 bis Dn) von der Server-Vorrichtung (10) zu empfangen und die mehreren Datensätze (D1, D2, D3 ... Dn) weiterzuleiten,
die Datenaustauscheinheit (2511) dafür konfiguriert ist, Daten zwischen mehreren Anwendungen auszutauschen, und
die Client-Anwendung (253) dafür konfiguriert ist, die Datenreihen (D1 bis Dn) zu verarbeiten, wobei:
die Weiterschaltungsanwendung (252) Folgendes beinhaltet:
eine Empfangseinheit (2521), die dafür konfiguriert ist, die Datenreihen (D1 bis Dn) zu empfangen,
eine erste Erzeugungseinheit (2522), die dafür konfiguriert ist, für jeden Unterdatensatz, der fortlaufend aus dem mindestens einen Unterdatensatz und gemäß einem bestimmten festgelegten Wahrscheinlichkeitsverhältnis ausgewählt wird, einen Blinddatensatz (DD) zu erzeugen, wobei sich der Blinddatensatz (DD) vom ausgewählten Unterdatensatz (SD) unterscheidet,
eine zweite Erzeugungseinheit (2523), die dafür konfiguriert ist, für jeweils den mindestens einen Unterdatensatz (SD) und den erzeugten Blinddatensatz (DD) eine Authentizitätsinformation zu erzeugen, und
eine erste Bereitstellungseinheit (2524), die dafür konfiguriert ist, über die Datenaustauscheinheit (2511) Daten für die Client-Anwendung (253) bereitzustellen, wobei die Daten den mindestens einen Unterdatensatz (SD) als gültige Daten, den erzeugten Blinddatensatz (DD) und die von der zweiten Erzeugungseinheit (2523) erzeugte Authentizitätsinformation beinhalten, und
wobei die Client-Anwendung (253) Folgendes beinhaltet:
eine Einholungseinheit (2531), die dafür konfiguriert ist, über die Datenaustauscheinheit (2511) einen Datensatz einzuholen, der den mindestens einen Unterdatensatz (SD) als gültige Daten und den erzeugten Blinddatensatz (DD) und die Authentizitätsinformation beinhaltet,
eine Bestätigungseinheit (2532), die dafür konfiguriert ist, die Authentizitätsinformation zu bestätigen, die in den Daten enthalten ist, die von der Einholungseinheit (2531) eingeholt wurden, um zu bestimmen, ob der Datensatz von der Datenaustauscheinheit (2511) ein gültiger Datensatz ist oder einen Blinddatensatz (DD) enthält, und
eine Verarbeitungseinheit (2534), die dafür konfiguriert ist, unter Verwendung des Datensatzes, der von der Bestätigungseinheit (2532) als gültig bestimmt wurde, einen festgelegten Prozess auszuführen.

2. Informationsverteilungssystem (1) nach Anspruch 1, wobei das Wahrscheinlichkeitsverhältnis abhängig von einer Quelle der Datenreihen (D1 bis Dn) bestimmt wird.

3. Informationsverteilungssystem (1) nach Anspruch 1, ferner eine zweite Bereitstellungseinheit umfassend, die einen Takt bereitstellt, wobei die zweite Erzeugungseinheit (2523) dafür eingerichtet ist, basierend auf dem mindestens einen Unterdatensatz (SD) oder dem erzeugten Blinddatensatz (DD) und dem von der zweiten Bereitstellungseinheit bereitgestellten Takt eine Authentizitätsinformation zu erzeugen.

4. Informationsverteilungssystem (1) nach Anspruch 1, wobei die erste Bereitstellungseinheit (2524) dafür eingerichtet ist, die Daten über die Datenaustauscheinheit (2511) bereitzustellen, wobei die Daten, für die von der zweiten Erzeugungseinheit (2523) die Authentizitätsinformation erzeugt wurde, unverschlüsselt sind.

5. Informationsverteilungssystem (1) nach Anspruch 1, wobei die zweite Erzeugungseinheit (2523) dafür eingerichtet ist, ein Element der Authentizitätsinformation für mehrere Unterdatensätze (SD) zu erzeugen.

6. Informationsverteilungssystem (1) nach Anspruch 5, wobei das eine Element der Authentizitätsinformation Informationen zum Identifizieren gültiger Unterdatensätze aus entsprechenden mehreren Unterdatensätzen (SD) beinhaltet.

7. Computerlesbares Speichermedium, das ein Programm speichert, welches bewirkt, dass eine Computervorrichtung einen Prozess ausführt, wobei der Prozess Folgendes umfasst:
Empfangen der Datenreihen (D1 bis Dn) in einer Weiterschaltungsanwendung (252) von einer Server-Vorrichtung (10) und Weiterleiten der mehreren Datensätze (D1, D2, D3 ... Dn), wobei die Datenreihen aus mehreren Datensätzen (D1, D2, D3 ... Dn) bestehen, wobei jeder der mehreren Datensätze mindestens einen Unterdatensatz (SD) beinhaltet, wobei jeder Unterdatensatz (SD) die gleichen Parameter beinhaltet, so dass sie Semantik aufweisen, indem sie fortlaufend analysiert werden,
Austauschen der Daten zwischen mehreren Anwendungen in einer Datenaustauscheinheit (2511) und
Verarbeiten der Datenreihen (D1 bis Dn) in einer Client-Anwendung (253),
wobei das Empfangen in der Weiterschaltungsanwendung (252) Folgendes beinhaltet:
Empfangen (2521) der Datenreihen (D1 bis Dn),
erstes Erzeugen (2522) eines Blinddatensatzes (DD) für jeden Unterdatensatz, der fortlaufend aus dem mindestens einen Unterdatensatz und gemäß einem bestimmten festgelegten Wahrscheinlichkeitsverhältnis ausgewählt wird, wobei sich der Blinddatensatz (DD) vom ausgewählten Unterdatensatz (SD) unterscheidet,
zweites Erzeugen (2523) einer Authentizitätsinformation für jeweils den mindestens einen Unterdatensatz (SD) und den erzeugten Blinddatensatz (DD) und
Bereitstellen (2524) der Daten, die den mindestens einen Unterdatensatz (SD) als gültige Daten und den erzeugten Blinddatensatz (DD) sowie die von der zweiten Erzeugungseinheit (2523) erzeugte Authentizitätsinformation beinhalten, für die Client-Anwendung (253) über die Datenaustauscheinheit (2511),
und wobei das Verarbeiten in der Client-Anwendung (253) Folgendes beinhaltet:
Einholen (2531) eines Datensatzes, der den mindestens einen Unterdatensatz (SD) als gültige Daten und den gegebenenfalls vorhandenen erzeugten Blinddatensatz (DD) sowie die Authentizitätsinformation beinhaltet, über die Datenaustauscheinheit (2511)
Bestätigen (2532) der Authentizitätsinformation, die in den eingeholten Daten enthalten ist, um zu bestimmen, ob der Datensatz von der Datenaustauscheinheit (2511) ein gültiger Datensatz ist oder einen Blinddatensatz (DD) beinhaltet, und
Ausführen (2534) eines festgelegten Prozesses unter Verwendung des Datensatzes, der als gültig bestimmt wurde.

8. Informationsverarbeitungsverfahren in einem Datenverteilungssystem (1), das einer Server-Vorrichtung (10) und eine Client-Vorrichtung (20) umfasst, wobei die Server-Vorrichtung (10) Datenreihen (D1 bis Dn) verteilt, wobei die Datenreihen aus mehreren Datensätzen (D1, D2, D3 ... Dn) bestehen, wobei jeder der mehreren Datensätze mindestens einen Unterdatensatz (SD) beinhaltet, wobei jeder Unterdatensatz (SD) die gleichen Parameter beinhaltet, so dass sie Semantik aufweisen, indem sie fortlaufend analysiert werden,
wobei das Verfahren Folgendes umfasst:
Empfangen der Datenreihen (D1 bis Dn) in einer Weiterschaltungsanwendung (252) von einer Server-Vorrichtung (10) und Weiterleiten der mehreren Datensätze (D1, D2, D3 ... Dn), wobei die Datenreihen aus mehreren Datensätzen (D1, D2, D3 ... Dn) bestehen, wobei jeder der mehreren Datensätze mindestens einen Unterdatensatz (SD) beinhaltet, wobei jeder Unterdatensatz (SD) die gleichen Parameter beinhaltet, so dass sie Semantik aufweisen, indem sie fortlaufend analysiert werden,
Austauschen der Daten zwischen mehreren Anwendungen in einer Datenaustauscheinheit (2511) und
Verarbeiten der Datenreihen (D1 bis Dn) in einer Client-Anwendung (253),
wobei das Empfangen in der Weiterschaltungsanwendung (252) Folgendes beinhaltet:
Empfangen (2521) der Datenreihen (D1 bis Dn),
erstes Erzeugen (2522) eines Blinddatensatzes (DD) für jeden Unterdatensatz, der fortlaufend aus dem mindestens einen Unterdatensatz und gemäß einem bestimmten festgelegten Wahrscheinlichkeitsverhältnis ausgewählt wird, wobei sich der Blinddatensatz (DD) vom ausgewählten Unterdatensatz (SD) unterscheidet,
zweites Erzeugen (2523) einer Authentizitätsinformation für jeweils den mindestens einen Unterdatensatz (SD) und den erzeugten Blinddatensatz (DD) und
Bereitstellen (2524) der Daten, die den mindestens einen Unterdatensatz (SD) als gültige Daten und den erzeugten Blinddatensatz (DD) sowie die von der zweiten Erzeugungseinheit (2523) erzeugte Authentizitätsinformation beinhalten, für die Client-Anwendung (253) über die Datenaustauscheinheit (2511),
und wobei das Verarbeiten in der Client-Anwendung (253) Folgendes beinhaltet:
Einholen (2531) eines Datensatzes, der den mindestens einen Unterdatensatz (SD) als gültige Daten und den gegebenenfalls vorhandenen erzeugten Blinddatensatz (DD) sowie die Authentizitätsinformation beinhaltet, über die Datenaustauscheinheit (2511),
Bestätigen (2532) der Authentizitätsinformation, die in den eingeholten Daten enthalten ist, um zu bestimmen, ob der Datensatz von der Datenaustauscheinheit (2511) ein gültiger Datensatz ist oder einen Blinddatensatz (DD) beinhaltet, und
Ausführen (2534) eines festgelegten Prozesses unter Verwendung des Datensatzes, der als gültig bestimmt wurde.

## Revendications

1. Système de distribution d'informations (1) comprenant un dispositif serveur (10) et un dispositif client (20),
le dispositif serveur (10) étant configuré pour distribuer des données en série (D1 à Dn), les données en série étant constituées d'une pluralité d'ensembles de données (D1, D2, D3 ... Dn), chacun de cette pluralité d'ensembles de données comprenant au moins un sous-ensemble de données (SD), chaque sous-ensemble de données (SD) comprenant les mêmes paramètres de façon à avoir des sémantiques en étant analysé de manière séquentielle,
le dispositif client (20) comprenant une application de relais (252), une unité d'échange de données (2511) et une application client (253),
l'application de relais (252) étant configurée pour recevoir les données en série (D1 à Dn) en provenance du dispositif serveur (10) et pour relayer la pluralité d'ensembles de données (D1, D2, D3 ... Dn),
l'unité d'échange de données (2511) étant configurée pour échanger des données entre une pluralité d'applications et
l'application client (253) étant configurée pour traiter les données en série (D1 à Dn),
**caractérisé en ce que**
l'application de relais (252) comprend
une unité de réception (2521) qui est configurée pour recevoir les données en série (D1 à Dn),
une première unité génératrice (2522) qui est configurée pour engendrer, pour chaque sous-ensemble de données sélectionné de manière séquentielle parmi ledit au moins un sous-ensemble de données (SD) et selon un certain taux de probabilité prédéterminé, un ensemble de données fictif (DD), l'ensemble de données fictif (DD) étant différent de l'ensemble de données sélectionné (SD),
une seconde unité génératrice (2523) qui est configurée pour engendrer des informations d'authentification pour chacun dudit au moins un sous-ensemble de données (SD) et dudit ensemble de données fictif (DD), et
une première unité de mise à disposition (2524) qui est configurée pour fournir des données via l'unité d'échange de données (2511) à l'application client (253), les données comprenant ledit au moins un sous-ensemble de données (SD) comme données valides, l'ensemble de données fictif (DD) et les informations d'authentification engendrées par la seconde unité génératrice (2523), et
l'application client (253) comprend
une unité d'obtention (2531) qui est configurée pour obtenir un ensemble de données comprenant ledit au moins un sous-ensemble de données (SD) comme données valides et l'ensemble de données fictif (DD) et les informations d'authentification via l'unité d'échange de données (2511),
une unité de vérification (2532) qui est configurée pour vérifier les informations d'authentification incluses dans les données obtenues par l'unité d'obtention (2531) pour déterminer si l'ensemble de données provenant de l'unité d'échange de données (2511) est un ensemble de données valide ou s'il comprend un ensemble de données fictif (DD), et
une unité de traitement (2534) qui est configurée pour mettre en oeuvre un procédé prédéterminé utilisant l'ensemble de données déterminé, par l'unité de vérification (2532), comme valide.

2. Système de distribution d'informations (1) selon la revendication 1, **caractérisé en ce que** le taux de probabilité est déterminé en fonction d'une source des données en série (D1 à Dn).

3. Système de distribution d'informations (1) selon la revendication 1, comprenant en outre
une seconde unité de mise à disposition qui fournit une horloge, **caractérisé en ce que**
la seconde unité génératrice (2523) est adaptée pour engendrer les informations d'authentification sur la base dudit au moins un sous-ensemble de données (SD) ou l'ensemble engendré de données fictif (DD) et l'horloge fournie par la seconde unité de mise à disposition.

4. Système de distribution d'informations (1) selon la revendication 1, **caractérisé en ce que**
la première unité de mise à disposition (2524) est adaptée pour fournir les données via l'unité d'échange de données (2511), les données pour lesquelles les informations d'authentification sont engendrées par la seconde unité génératrice (2523), étant non cryptées.

5. Système de distribution d'informations (1) selon la revendication 1, **caractérisé en ce que** la seconde unité génératrice (2523) est adaptée pour engendrer un élément des informations d'authentification pour une pluralité de sous-ensembles de données (SD).

6. Système de distribution d'informations (1) selon la revendication 5, **caractérisé en ce que** l'élément des informations d'authentification comprend des informations pour identifier des sous-ensembles de données valides d'une pluralité correspondante de sous-ensembles de données (SD).

7. Moyen de stockage lisible par ordinateur, stockant un programme qui fait un dispositif ordinateur mettre en oeuvre un procédé, le procédé comprenant
dans une application de relais (252), recevoir les données en série (D1 à Dn) en provenance d'un dispositif serveur (10) et relayer la pluralité d'ensembles de données (D1, D2, D3 ... Dn), les données en série étant constituées d'une pluralité d'ensembles de données (D1, D2, D3 ... Dn), chacun de cette pluralité d'ensembles de données comprenant au moins un sous-ensemble de données (SD), chaque sous-ensemble de données (SD) comprenant les mêmes paramètres de façon à avoir des sémantiques en étant analysé de manière séquentielle,
dans une unité d'échange de données (2511), échanger des données entre une pluralité d'applications et
dans une application client (253), traiter les données en série (D1 à Dn),
**caractérisé en ce que**
recevoir dans l'application de relais (252) comprend
recevoir (2521) les données en série (D1 à Dn),
engendrer en premier (2522), pour chaque sous-ensemble de données sélectionné de manière séquentielle parmi ledit au moins un sous-ensemble de données (SD) et selon un certain taux de probabilité prédéterminé, un ensemble de données fictif (DD), l'ensemble de données fictif (DD) étant différent de l'ensemble de données sélectionné (SD),
engendrer en second (2523) des informations d'authentification pour chacun dudit au moins un sous-ensemble de données (SD) et dudit ensemble de données fictif (DD), et
fournir (2524) des données via l'unité d'échange de données (2511) à l'application client (253), les données comprenant ledit au moins un sous-ensemble de données (SD) comme données valides, l'ensemble de données fictif (DD) et les informations d'authentification engendrées par la seconde unité génératrice (2523), et **en ce que**
traiter dans l'application client (253) comprend
obtenir (2531) un ensemble de données comprenant ledit au moins un sous-ensemble de données (SD) comme données valides et, le cas échéant, l'ensemble de données fictif (DD), et les informations d'authentification via l'unité d'échange de données (2511),
vérifier (2532) les informations d'authentification incluses dans les données obtenues par l'unité d'obtention (2531) pour déterminer si l'ensemble de données provenant de l'unité d'échange de données (2511) est un ensemble de données valide ou s'il comprend un ensemble de données fictif (DD), et
mettre en oeuvre (2534) un procédé prédéterminé utilisant l'ensemble de données déterminé comme valide.

8. Procédé de traitement d'informations dans un système de distribution d'informations (1) comprenant un dispositif serveur (10) et un dispositif client (20), le dispositif serveur (10) distribuant des données en série (D1 à Dn), les données en série étant constituées d'une pluralité d'ensembles de données (D1, D2, D3 ... Dn), chacun de cette pluralité d'ensembles de données comprenant au moins un sous-ensemble de données (SD), chaque sous-ensemble de données (SD) comprenant les mêmes paramètres de façon à avoir des sémantiques en étant analysé de manière séquentielle,
le procédé comprenant
dans une application de relais (252), recevoir les données en série (D1 à Dn) en provenance d'un dispositif serveur (10) et relayer la pluralité d'ensembles de données (D1, D2, D3 ... Dn), les données en série étant constituées d'une pluralité d'ensembles de données (D1, D2, D3 ... Dn), chacun de cette pluralité d'ensembles de données comprenant au moins un sous-ensemble de données (SD), chaque sous-ensemble de données (SD) comprenant les mêmes paramètres de façon à avoir des sémantiques en étant analysé de manière séquentielle,
dans une unité d'échange de données (2511), échanger des données entre une pluralité d'applications et
dans une application client (253), traiter les données en série (D1 à Dn),
**caractérisé en ce que**
recevoir dans l'application de relais (252) comprend
recevoir (2521) les données en série (D1 à Dn),
engendrer en premier (2522), pour chaque sous-ensemble de données sélectionné de manière séquentielle parmi ledit au moins un sous-ensemble de données (SD) et selon un certain taux de probabilité prédéterminé, un ensemble de données fictif (DD), l'ensemble de données fictif (DD) étant différent de l'ensemble de données sélectionné (SD),
engendrer en second (2523) des informations d'authentification pour chacun dudit au moins un sous-ensemble de données (SD) et dudit ensemble de données fictif (DDE), et
fournir (2524) des données via l'unité d'échange de données (2511) à l'application client (253), les données comprenant ledit au moins un sous-ensemble de données (SD) comme données valides et l'ensemble de données fictif (DD) et les informations d'authentification engendrées par la seconde unité génératrice (2523), et **en ce que**
traiter dans l'application client (253) comprend
obtenir (2531) un ensemble de données comprenant ledit au moins un sous-ensemble de données (SD) comme données valides et, le cas échéant, l'ensemble de données fictif (DD), et les informations d'authentification via l'unité d'échange de données (2511),
vérifier (2532) les informations d'authentification incluses dans les données obtenues pour déterminer si l'ensemble de données provenant de l'unité d'échange de données (2511) est un ensemble de données valide ou s'il comprend un ensemble de données fictif (DDE), et
mettre en oeuvre (2534) un procédé prédéterminé utilisant l'ensemble de données déterminé comme valide.
